# EUROPÄISCHE PATENTANMELDUNG

(11) **EP 2 103 502 A1**
(43) Veröffentlichungstag der Anmeldung: **23.09.2009**
(21) Anmeldenummer: 08102769.0
(22) Anmeldetag: 19.03.2008
(51) Int. Cl.: B62D 25/20, B62D 33/02

(54) **Nutzfahrzeug mit einem Kofferaufbau**

(71) Anmelder: Schmitz Cargobull AG, 48341 Altenberge (DE)
(72) Erfinder: Heßling, Alfons, 48683 Ahaus (DE); Küpers, Josef, 48703 Stadtlohn (DE); Liesbrock, Werner, 48691 Vreden (DE)
(74) Vertreter: Cohausz & Florack

(57) **Zusammenfassung**

Nutzfahrzeug (1) mit einem Kofferaufbau (2), wobei das Nutzfahrzeug (1) einen Leiterrahmen mit Chassislängsträgern und Chassisquerträgern aufweist, wobei der Kofferaufbau (2) zwei Seitenwände (10, 11), ein Dach, einen Boden (9) und eine Mehrzahl von Querträgerelementen (10) umfasst, wobei die Mehrzahl von Querträgerelementen (10) in Längsrichtung des Kofferaufbaus (2) beabstandet zueinander angeordnet ist. Um einen Kofferaufbau zu schaffen, der einfacher und schneller herzustellen ist, ist vorgesehen, dass die Mehrzahl von Querträgerelementen (10) jeweils separat mit dem Leiterrahmen verbunden ist.

## Beschreibung

Die Erfindung betrifft ein Nutzfahrzeug mit einem Kofferaufbau, wobei das Nutzfahrzeug einen Leiterrahmen mit Chassislängsträgern und Chassisquerträgern aufweist, wobei der Kofferaufbau zwei Seitenwände, ein Dach, einen Boden und eine Mehrzahl von Querträgerelementen umfasst, wobei die Mehrzahl von Querträgerelementen in Längsrichtung des Kofferaufbaus beabstandet zueinander angeordnet ist.

Kofferaufbauten für Lastkraftwagen mit einem Leiterrahmen sind in unterschiedlichen Ausführungen bekannt. Dabei weist der Kofferaufbau Längsträger auf, die auf die Chassislängsträger des Lastkraftwagens montiert werden. Auf diesen Längsträgern des Kofferaufbaus ruhen Querträger, die den Boden abstützen und von einer Seitenwand des Kofferaufbaus zur gegenüberliegenden Seitenwand verlaufen. Diese Ausgestaltung der bekannten Kofferaufbauten stellt letztlich die erforderliche Steifigkeit des Kofferaufbaus sicher. Insbesondere unerwünschte Verwindungen des Kofferaufbaus während der Fahrt des Lastkraftwagens können auf diese Weise minimiert werden.

Zudem dient die beschriebene Ausgestaltung des Kofferaufbaus dem gleichmäßigen Ableiten von Tragkräften. Die Tragekräfte des Kofferaufbaus wenden lokal von den voneinander beabstandeten Querträgern aufgenommen und zu den entsprechend stabil ausgestaltete Längsträgern des Kofferaufbaus weitergeleitet, die die Kräfte dann an den Leiterrahmen insbesondere deren Chassislängsträger ableiten.

Im Übrigen wird über die Längsträger des Kofferaufbaus ein erforderlicher Höhenausgleich des Kofferaufbaus in Bezug zum Lastkraftwagen erreicht. Der Kofferaufbau ragt über die Räder der hinteren Achse/Achsen des Lastkraftwagens und muss daher einen Mindestabstand zu den Rädern einhalten.

Im Zusammenhang mit den bekannten Kofferaufbauten besteht das grundsätzliche Interesse, die Kosten der Kofferaufbauten zu senken, um eine höhere Wirtschaftlichkeit zu erreichen. Dabei ist nicht zuletzt zu berücksichtigen, dass die bekannten Kofferaufbauten mit erheblichem, handwerklichem Aufwand bei nicht unerheblichem Zeitaufwand hergestellt werden.

Vor diesem Hintergrund liegt der Erfindung die Aufgabe zu Grunde, einen Kofferaufbau zu schaffen, der einfacher und schneller herzustellen ist.

Diese Aufgabe ist erfindungsgemäß durch die Lehre des Anspruchs 1 gelöst worden. In den auf den Anspruch 1 rückbezogenen Unteransprüchen sind vorteilhafte Ausgestaltungen dieser Lehre angegeben.

Der Erfindung liegt die Erkenntnis zu Grunde, dass eine separate Anbindung der einzelnen Querträger an den Leiterrahmen des Nutzfahrzeugs unter Umgehung von dazwischen angeordneten Längsträgern des Kofferaufbaus zwar zu einer Schwächung des Kofferaufbaus an sich führt, die auf andere Weise wieder ausgeglichen werden muss. Dadurch können allerdings fertigungstechnische Vorteile generiert werden, welche den Verzicht auf die Längsträger des Kofferaufbaus rechtfertigen. Die Querträgerelemente sind also einzeln mit dem Leiterrahmen des Nutzfahrzeugs verbunden, ohne dass dann zwischen dem Leiterrahmen und den Querträgerelementen noch eine gemeinsame Tragestruktur vorgesehen wäre, die sich in Längsrichtung des Kofferaufbaus erstreckt und mit einer bzw. der Mehrzahl von Querträgerelementen verbunden ist, wie dies typischerweise bei den bekannten Längsträgern der Kofferaufbauten nach dem Stand der Technik der Fall wäre.

Eine entsprechende Anordnung der Querträgerelemente wird insbesondere dann erreicht, wenn die Mehrzahl von Querträgerelementen nicht nur separat, sondern auch unmittelbar mit dem Leiterrahmen verbunden ist. Es kann aber auch eine solche Verbindung vorgesehen sein, bei der zwischen dem Querträgerelement und dem Leiterrahmen des Nutzfahrzeugs ein zusätzliches separates Verbindungsmittel angeordnet ist. Dabei zeichnen sich die separaten Verbindungsmittel dadurch aus, dass jedes einem bestimmten Querträgerelement zugeordnet ist und nicht etwa mehrere Querträgerelemente miteinander verbindet und in dieser Weise an den Leiterrahmen anbindet.

Bei den Nutzfahrzeugen handelt es sich in erster Linie um Lastkraftwagen und deren Anhänger zu denen auch Auflieger gezählt werden. Diese werden auch als Trailer bezeichnet. Insbesondere werden unter den Nutzfahrzeugen aber, vorzugsweise kleinere, Lastkraftwagen verstanden, an deren Leiterrahmen der Kofferaufbau montiert ist. Entsprechende Lastkraftwagen werden beispielsweise umfangreich von Autovermietungen mit einem maximalen Gesamtgewicht von 7,5 Tonnen eingesetzt. Im Folgenden wird der besseren Verständlichkeit halber nur der Begriff Lastkraftwagen verwendet. Die entsprechenden Ausführungen gelten aber stets auch ganz generell für andere Nutzfahrzeuge im zuvor beschriebenen Sinn.

Bei der Herstellung der Kofferaufbauten ist stets vorab zu berücksichtigen, auf welchem Lastkraftwagen der Kofferaufbau montiert werden soll. Denn die Lastkraftwagen weisen jeweils individuelle Leiterrahmenabmessungen auf. Bei dem erfindungsgemäßen Kofferaufbau wird eine hohe Flexibilität bei der Fertigung erzielt, denn die Querträgerelemente verlaufen von einer Seitenwand zur anderen und dabei über die Chassislängsträger hinweg. Es muss daher nur an den geeigneten Stellen eine Verbindung der einzelnen Querträgerelemente mit dem Leiterrahmen, vorzugsweise dem jeweiligen Chassislängsträger, geschaffen werden. Aufgrund der Anzahl der verwendeten Querträgerelemente ergeben sich ausreichend viele Schnittpunkte zwischen dem Kofferaufbau und dem Leiterrahmen, um die auf den Kofferaufbau einwirkenden Kräfte zuverlässig an den Leiterrahmen des Nutzfahrzeugs abzuleiten.

Die Vorteile des erfindungsgemäßen Kofferaufbaus liegen insbesondere darin, dass die Kofferaufbauten modular aufgebaut und damit in hohem Maße vorkonfektioniert gefertigt werden können. Es besteht keine Limitierung durch den vom Nutzfahrzeug vorgegebenen Leiterrahmen, der dann die Art und Lage der entsprechenden Komponenten des Kofferaufbaus in hohem Maße bestimmt. Im Ergebnis erlaubte das bekannte Fertigungsprinzip ausschließlich eine sehr aufwändige Einzelfertigung unterschiedlicher Kofferaufbauten. Erfindungsgemäß können aber in hohem Maße standardisierte Bauteile verwendet werden, so dass nur eine geringe Anzahl unterschiedlicher Bauteile bereitgehalten werden muss. Durch geeignete Kombination der Bauteile untereinander kann dennoch für jede Anwendung der optimale Kofferaufbau hergestellt werden.

Eine erste vorteilhafte Ausgestaltung der Erfindung sieht vor, dass die Mehrzahl von Querträgerelementen jeweils über Seitenwandanschlüsse mit den beiden Seitenwänden verbunden ist. Dabei ist die Verbindung einerseits und sind die Seitenwandanschlüsse andererseits derart ausgebildet, dass die Seitenwandanschlüsse zur im Wesentlichen vollständigen Ableitung der Traglast der Seitenwände und des Dachs an die Mehrzahl von Querträgern ausgebildet sind. Dadurch wird also die Funktionalität der aus dem Stand der Technik bekannten Längsträger in die Seitenwände verlegt, die letztlich nicht nur als Hülle und gegebenenfalls auch Isolierung des Kofferaufbaus wirken, sondern zusätzlich als Längsträgerelemente dienen. Der Kofferaufbau kommt also ohne weiteres ohne separate Längsträgerelemente aus. Die Kräfte des Kofferaufbaus werden an den Seitenwandanschlüssen auf die Querträger abgeleitet, die die Kräfte in Richtung der Fahrzeugmitte bis zu den Verbindungspunkten der einzelnen Querträgerelemente mit dem Leiterrahmen übertragen, wo die Kräfte auf den Lastkraftwagen abgeleitet werden.

Bei den Seitenwandanschlüssen handelt es sich insbesondere lediglich um die Bereiche der Seitenwände, an denen die Querträgerelemente mit den Seitenwänden verbunden sind. Eine besondere, tragende Ausgestaltung der Seitenwände ist nicht zwingend erforderlich, kann aber durchaus vorteilhaft sein.

Sind die Seitenwandanschlüsse durch zusätzliche tragende Elemente definiert, erstrecken sich diese zur Verbesserung der Steifigkeit des Kofferaufbaus im Wesentlichen über die gesamte Längsrichtung des Kofferaufbaus. Dabei können die Seitenwandanschlüsse in Längsrichtung der Seitenwände unterbrochen sein. Ein einteiliger Verlauf der Seitenwandanschlüsse ist aber besonders zweckmäßig.

Alternativ oder zusätzlich können zur Verbesserung der Steifigkeit des Kofferaufbaus die Seitenwandanschlüsse jeweils wenigstens ein sich im Wesentlichen über die gesamte Längsrichtung des Kofferaufbaus erstreckendes Anschlussprofil aufweisen. Das Anschlussprofil ist dann vorzugsweise über die gesamte Längserstreckung des Kofferaufbaus mit allen Querträgerelementen verbunden. Weisen beide Seitenwandanschlüsse entsprechende Profile auf, dann wird auf diese Weise eine Art Leiterrahmen mit außen liegenden Längsträgern geschaffen. Das Anschlussprofil ist vorzugsweise ein einstückiges, beispielsweise stranggepresstes Profil. Bedarfsweise kann das Anschlussprofil aber auch aus mehreren solcher Profile aufgebaut sein, die sich dann wiederum im Wesentlichen über die gesamte Längsrichtung des Kofferaufbaus erstrecken.

Der Boden des Kofferaufbaus ist zur Vereinfachung des Kofferaufbaus vorzugsweise derart ausgebildet, um die auf dem Boden lastende Traglast im Wesentlichen vollständig an die Mehrzahl von Querträgerelementen abzuleiten. Dem steht nicht entgegen, dass der Boden mit den Seitenwänden verbunden ist. Weiter vorzugsweise ruht der Boden des Kofferaufbaus dort auf Anschlussprofilen, die ja von den Querträgerelementen gestützt werden.

Um die erforderliche Anzahl an Querträgerelementen gering zu halten, können sich in Längsrichtung des Kofferaufbaus erstreckende Aussteifungen zum Aufnehmen eines Teils der Traglast des Bodens vorgesehen sein. Damit im Bodenbereich auf Längsträger des Kofferaufbaus verzichtet werden kann, werden die Aussteifungen von der Mehrzahl von Querträgerelementen getragen und nicht umgekehrt.

In diesem Zusammenhang bietet es sich an, wenn die Aussteifungen jeweils mit einander gegenüber liegenden Enden an zwei benachbarten Querträgerelementen befestigt sind. Die Aussteifungen verlaufen also zwar in Längsrichtung, aber jeweils nur von einem Querträgerelement bis zu dem benachbarten Querträgerelement.

Nach einer besonders bevorzugten Ausgestaltung der Erfindung ist vorgesehen, dass die Mehrzahl von Querträgerelementen vorzugsweise jeweils über Konsolen mit dem Leiterrahmen des Nutzfahrzeugs verbunden ist. Die Konsolen sorgen letztlich für den im Einzelfall benötigten Höhenausgleich des Kofferaufbaus zum Leiterrahmen des Lastkraftwagens. Die Konsolen sind zudem vorzugsweise lösbar mit den Querträgerelementen verbunden, so dass die Konsolen immer gerade an den Stellen an den Querträgerelementen fixiert werden können, wo sich darunter ein Chassislängsträger des Lastkraftwagens befindet.

Ein weiterer Vorteil der Konsolen besteht darin, dass auf ein Baukastenprinzip und damit auf standardisierte Querträgerelemente und Konsolen zurückgegriffen werden kann, um sehr schnell und unkompliziert Kofferaufbauten für unterschiedliche Lastkraftwagen herstellen zu können, ohne eine Vielzahl von Spezialbauteilen bereithalten zu müssen. Die Positionierung der Konsolen quer zum Leiterrahmen des Lastkraftwagens ist durch dessen Chassislängsträger festgelegt. Durch entsprechende Kombination von standardisierten Konsolen und Querträgerelementen kann einerseits ein ausreichender Höhenausgleich und andererseits eine ausreichende Aussteifung des Kofferaufbaus realisiert werden.

Als weiterer Freiheitsgrad kommt hier noch der Abstand der Querträgerelemente in Längsrichtung des Kofferaufbaus in Betracht, der hinsichtlich der jeweils gewünschten Traglast des Bodens des Kofferaufbaus gewählt werden muss. Im Ergebnis können also mit einer geringen Anzahl verschiedener Komponenten unterschiedlichste Lastkraftwagen für unterschiedliche Anwendungen mit geeigneten Kofferaufbauten ausgerüstet werden. Diese Flexibilität führt letztlich auch zu einer deutlich schnelleren Montage der Kofferaufbauten.

Nachfolgend ist die Erfindung anhand einer lediglich Ausführungsbeispiele darstellenden Zeichnung näher erläutert.

### Es zeigen:

- Fig. 1: ein erstes Ausführungsbeispiel eines erfindungsgemäßen Nutzfahrzeugs in Form eines Lastkraftwagen mit einem Kofferaufbau;
- Fig. 2: die Unterseite des Kofferaufbaus aus Fig. 1 in einer Detaildarstellung;
- Fig. 3: ein Detail des Kofferaufbaus aus Fig. 1 in der Ansicht III-III aus Fig. 2;

- Fig. 4: ein weiteres Detail des Kofferaufbaus aus Fig. 1 in der Ansicht IV-IV aus Fig. 2 und
- Fig. 5: ein Detail eines zweiten Ausführungsbeispiels eines erfindungsgemäßen Nutzfahrzeugs in einer Schnittansicht entsprechend dem Detail aus Fig. 3.

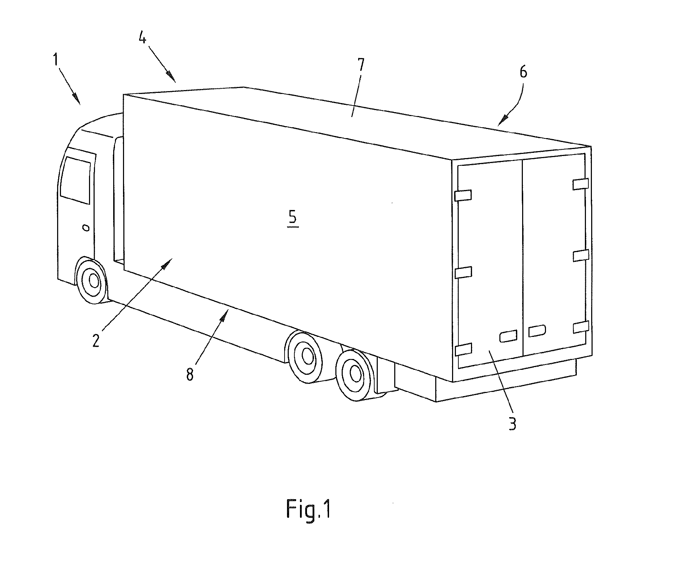

In der Fig. 1 ist ein Nutzfahrzeug 1 in Form eines Lastkraftwagens mit einem Kofferaufbau 2 dargestellt. Der Kofferaufbau 2 ruht auf einem nicht im Einzelnen dargestellten Leiterrahmen des Lastkraftwagens, der sich aus Chassislängsträgern und Chassisquerträgern zusammensetzt, wie dies allgemein üblich ist. Der Kofferaufbau umfasst neben einer Rückwand 3 und einer Stirnwand 4 zwei Seitenwände 5, 6, ein Dach 7 und eine Bodenanordnung 8.

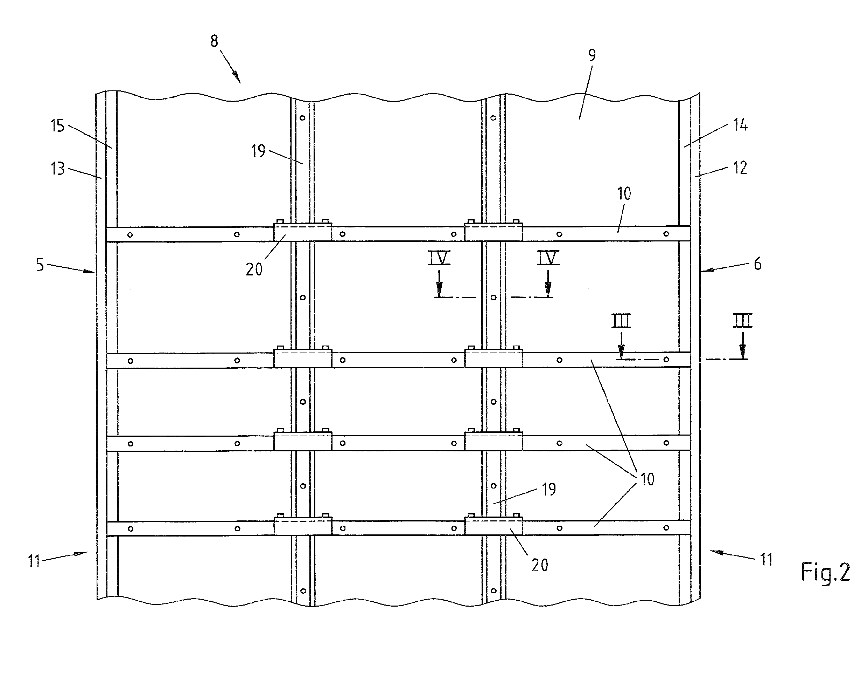

Ein Detail der Bodenanordnung 8 ist in der Fig. 2 dargestellt, und zwar aus einer Blickrichtung von unterhalb des Kofferaufbaus 2. Der besseren Übersichtlichkeit halber sind in der Fig. 2 die zum Lastkraftwagen 1 gehörenden Bauteile weggelassen worden und nur der Kofferaufbau 2 als solcher dargestellt.

Unterhalb des eigentlichen Bodens 9 des Kofferaufbaus 2 sind eine Mehrzahl von in Längsrichtung des Kofferaufbaus 2 voneinander beabstandete Querträgerelemente 10 vorgesehen. Die Querträgerelemente 10 erstrecken sich von einer Seitenwand 5 zur gegenüberliegenden Seitenwand 6 und sind dabei an Seitenwandanschlüssen 11 mit jeweils einem Anschlussprofil 12, 13 verbunden. Die Anschlussprofile sind Teile der gegenüber dem Boden 9 nach unten überstehenden Seitenwände 5, 6. Die Anschlussprofile 12, 13 weisen in Längsrichtung des Kofferaufbaus 2 erstreckende Auflagen 14, 15 auf, auf denen der Boden 9 angrenzend zu den Seitenwänden 5, 6 aufliegt.

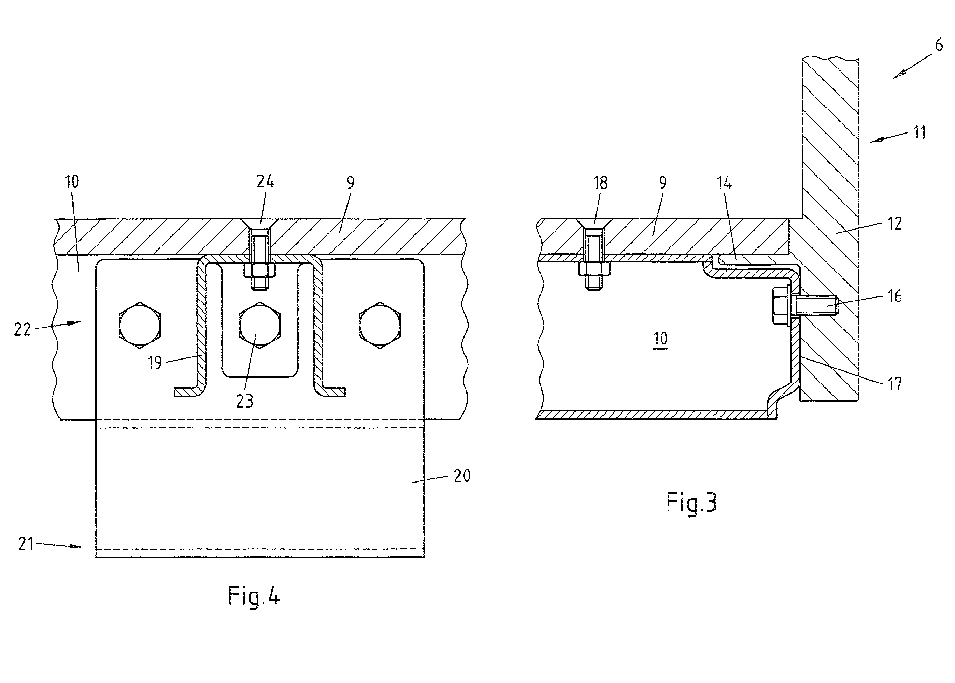

Dies ist insbesondere in der Fig. 3 dargestellt, die die Bodenanordnung 8 im Bereich des Seitenwandanschlusses 11 aus der Blickrichtung III-III der Fig. 2 zeigt. In der Fig. 3 ist ferner die Verbindung 16 zwischen dem Querträgerelement 10 und dem Anschlussprofil 12 der Seitenwand 6 dargestellt, bei der es sich um eine Schraubverbindung handelt. Das Querträgerelement 10 und das Anschlussprofil 12 liegen über Anlageflächen 17 aneinander an. Auch der Boden 9 liegt auf dem Querträgerelement 10 auf und ist über Schraubverbindungen 18 mit dem Querträgerelement 10 verbunden.

In der Fig. 2 ist ferner dargestellt, dass zwischen den Querträgerelementen 10 der Bodenanordnung 8 Aussteifungen 19 in Form von nach unten offenen U-förmigen Profilen vorgesehen sind. Die Aussteifungen 19 sind in Längsrichtung des Kofferaufbaus 2 ausgerichtet. Dort, wo die Aussteifungen 19 auf die Querträgerelemente 10 treffen, sind Konsolen 20 mit den Querträgerelementen 10 verbunden. Grundsätzlich könnten die Konsolen 20 und die Aussteifungen 19 auch an unterschiedlichen Stellen mit den Querträgerelementen verbunden sein.

Die Verbindung zwischen einem Querträgerelement 10 und einer Konsole 20 ist in der Fig. 4 dargestellt, welche die Bodenanordnung 7 gemäß der Blickrichtung IV-IV aus Fig. 2 zeigt. Die Konsolen 20 sind L-förmig ausgebildet, könnten jedoch auch jede andere Form aufweisen. Mit ihrem unteren Ende 21 sind die Konsolen 20 mit einem Chassislängsträger des Lastkraftwagens 1 verbunden und stützen so den gesamten Kofferaufbau 2 auf dem Leiterrahmen des Lastkraftwagens ab. Mit dem oberen Ende 22 der Konsolen 20 sind diese mit dem Querträgerelement 10 und im dargestellten Ausführungsbeispiel auch über wenigstens eine identische Schraubverbindung 23 mit wenigstens einer Aussteifung 19 verbunden. Die Konsolen 20 und die Querträgerelemente 10 sind im Sinne eines Baukastensystems miteinander kombinierbar. Gleiches gilt auch für die Aussteifungen 19, da auch die Abstände zwischen den Querträgerelementen 10 standardisiert sind.

Bei dem in der Fig. 4 dargestellten Ausführungsbeispiel ist der Boden 9 des Kofferaufbaus auch über Schraubverbindungen 24 mit den Aussteifungen 19 verbunden.

Bei dem in der Fig. 2 dargestellten Ausführungsbeispiel des Kofferaufbaus 2 bzw. der Bodenanordnung 8 wird zwar mehr oder weniger auch eine Rahmenstruktur unterhalb des Bodens 9 vorgesehen, allerdings wird gänzlich auf entlang der Mitte des Bodens verlaufende Längsträger verzichtet, die zur Montage auf dem Leiterrahmen des Lastkraftwagens vorgesehen sind. Ferner ist auch kein entlang der Mitte des Bodens verlaufender, sich auf die Mehrzahl von Querträgerelementen abstützender Längsträger vorgesehen. Die Querträgerelemente 10 nehmen vielmehr die Traglast über den Boden 9 und die Seitenwände 5, 6 auf, leiten die Traglast in Richtung der Mittellängsachse der Bodenanordnung 8 und führen die Traglast unmittelbar über die Konsolen 20 an den Leiterrahmen des Lastkraftwagens 1 ab.

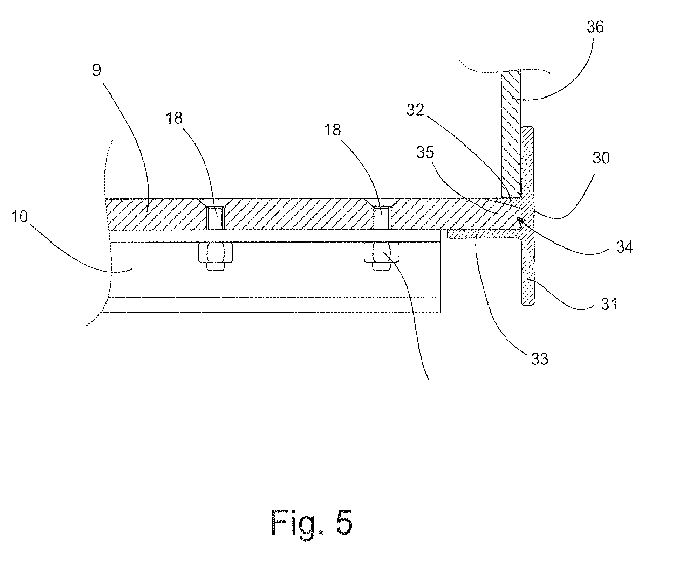

Ein weiteres Ausführungsbeispiel eines Seitenwandanschlusses eines Bodens 9 ist in der Fig. 5 dargestellt. Bei diesem Ausführungsbeispiel sind die sich in Längsrichtung des Kofferaufbaus erstreckenden Ränder des Bodens 9, der als Bodenplatte ausgebildet ist, jeweils auf ein als Aluminiumprofil ausgebildetes Anschlussprofil 30 aufgeschoben. Das Anschlussprofil 30 weist dabei einen sich in Längsrichtung des Kofferaufbaus über die gesamte Länge des Bodens 9 erstreckenden Basisabschnitt 31, einen ersten von dem Basisabschnitt 31 in Richtung der Bodenplatte abstehenden ersten Schenkelabschnitt 32 und einen nach unten beabstandet zu dem ersten Schenkelabschnitt 32 angeordneten, ebenfalls von dem Basisabschnitt 31 in Richtung der Bodenplatte abstehenden unteren Schenkelabschnitt 33 auf. Zwischen den Schenkelabschnitten 32 und 33 ist auf diese Weise eine Aufnahme 34 gebildet, in die der Boden 9 mit ihrem Randbereich eingeschoben ist. Dabei steht der obere Schenkelabschnitt 32 weniger weit vor als der untere Schenkelabschnitt 33 und weist eine Querschnittsform auf, die ausgehend vom Basisabschnitt 31 in Richtung der freien Kante des oberen Schenkelabschnitts 32 spitz zuläuft. Die Oberseite des oberen Schenkelabschnitts 32 verläuft dabei parallel zur Ladefläche des Bodens 9 und damit zur Oberseite der Bodenplatte.

Im in die Aufnahme 34 eingeschobenen Randbereich 35 ist die Bodenplatte ausgehend von der Ladefläche so abgeschrägt, dass er formschlüssig und bündig in der Aufnahme 34 sitzt. Die derart gebildete Ausnehmung ist dabei so geformt, dass bei fertig in die Aufnahme 34 eingeschobenem Randbereich 35 die Oberseite des oberen Schenkelabschnitts 32 flächenbündig zur Ladefläche ausgerichtet ist. Um die Verbindung zwischen dem eine Längsträgerfunktion übernehmenden Anschlussprofil 30 und dem Boden 9 zu unterstützen, kann vor dem Einschieben des Randbereichs 35 in die Aufnahme 34 Kleber eingebracht werden. Zusätzlich können die Schenkelabschnitte 32,33 durch hier nicht gezeigte Schrauben mit dem Boden 9 verschraubt werden.

Im fertig montierten Zustand steift das Anschlussprofil 30 die Bodenplatte an ihren Längsseiten aus. Dies erlaubt es, die Querträger 10 in größeren Abständen anzuordnen, als dies ohne die Anschlussprofile 30 möglich wäre. Gleichzeitig kann das Anschlussprofil 30 zum Befestigen der Seitenwände 36 des Kofferaufbaus 2 am Boden 9 genutzt werden. Zur weiteren Aussteifung des Kofferaufbaus 2 sind die Anschlussprofile 30 mit den Querträgern 10 verbunden, insbesondere verschraubt, ähnlich der Darstellung des Seitenwandanschlusses in Fig. 3.

## Patentansprüche

1. Nutzfahrzeug (1) mit einem Kofferaufbau (2), wobei das Nutzfahrzeug (1) einen Leiterrahmen mit Chassislängsträgern und Chassisquerträgern aufweist, wobei der Kofferaufbau (2) zwei Seitenwände (10, 11, 36), ein Dach, einen Boden (9) und eine Mehrzahl von Querträgerelementen (10) umfasst, wobei die Mehrzahl von Querträgerelementen (10) in Längsrichtung des Kofferaufbaus (2) beabstandet zueinander angeordnet ist,
**dadurch gekennzeichnet, dass** die Mehrzahl von Querträgerelementen (10) jeweils separat mit dem Leiterrahmen verbunden ist.

2. Nutzfahrzeug nach Anspruch 1, **dadurch**
**gekennzeichnet, dass** die Mehrzahl von Querträgerelementen (10) jeweils unmittelbar mit dem Leiterrahmen verbunden ist.

3. Nutzfahrzeug nach Anspruch 1 oder 2, **dadurch**
**gekennzeichnet, dass** die Mehrzahl von Querträgerelementen (10) jeweils über Seitenwandanschlüsse (11) mit den beiden Seitenwänden (5, 6) verbunden ist und dass die Seitenwandanschlüsse (11) zur im Wesentlichen vollständigen Ableitung der Traglast der Seitenwände (5, 6) und des Dachs (7) an die Mehrzahl von Querträgern (10) ausgebildet sind.

4. Nutzfahrzeug nach Anspruch 3, **dadurch gekennzeichnet, dass** die Seitenwandanschlüsse (11) sich im Wesentlichen über die gesamte Längsrichtung des Kofferaufbaus (2) erstrecken.

5. Nutzfahrzeug nach Anspruch 4, **dadurch gekennzeichnet, dass** die Seitenwandanschlüsse (11) wenigstens ein sich im Wesentlichen über die gesamte Längsrichtung des Kofferaufbaus (2) erstreckendes Anschlussprofil (12, 13, 30) aufweisen.

6. Nutzfahrzeug nach einem der voranstehenden Ansprüche,
**dadurch gekennzeichnet, dass** der Boden (9) derart ausgebildet ist, um die Traglast des Bodens (9) im Wesentlichen vollständig an die Mehrzahl von Querträgerelementen (10) abzuleiten.

7. Nutzfahrzeug nach einem der voranstehenden Ansprüche,
**dadurch gekennzeichnet, dass** sich in Längsrichtung des Kofferaufbaus (2) erstreckende Aussteifungen (19) zum Aufnehmen eines Teils der Traglast des Bodens (9) vorgesehen sind und dass die Aussteifungen (19) von der Mehrzahl von Querträgerelementen (10) getragen werden.

8. Nutzfahrzeug nach Anspruch 7, **dadurch gekennzeichnet, dass** die Aussteifungen (19) jeweils mit einander gegenüberliegenden Enden an zwei benachbarten Querträgerelementen (10) befestigt sind.

9. Nutzfahrzeug nach einem der voranstehenden Ansprüche,
**dadurch gekennzeichnet, dass**
die Mehrzahl von Querträgerelementen (10) für einen Höhenausgleich über Konsolen (20) mit dem Leiterrahmen des Nutzfahrzeugs (1) verbunden ist.

10. Nutzfahrzeug nach einem der voranstehenden Ansprüche,
**dadurch gekennzeichnet, dass**
an den Boden (9) seitlich ein Anschlussprofile (30) angeschlossen ist, der eine Aufnahme (34) aufweist, in die der Boden (9) mit einem längsseitigen Randbereich (35) formschlüssig eingeschoben ist.

11. Nutzfahrzeug nach Anspruch 10, **dadurch gekennzeichnet, dass** das Anschlussprofil (30) einen sich in Längsrichtung des Bodens (9) erstreckenden Basisabschnitt (31) und von dem Basisabschnitt (31) in Richtung des Bodens (9) abstehende Schenkelabschnitte (32,33) aufweist, die zwischen sich die der Bodenplatte (9) zugeordnete Aufnahme (34) begrenzen.

12. Nutzfahrzeug nach Anspruch 11, **dadurch**
**gekennzeichnet, dass** in den dem Anschlussprofil (30) zugeordneten Randbereich (35) der Boden (9) eine Ausnehmung eingeformt ist, die von der freien, zum Absetzen der Last bestimmten Ladefläche ausgeht und sich bis zum dem Anschlussprofil (30) zugeordneten Rand des Bodens (9) erstreckt, und dass die Tiefe der Ausnehmung (34) so bemessen ist, dass im fertig montierten Zustand der der Ladefläche zugeordnete Schenkelabschnitt (32) des Anschlussprofils (30) mit seiner Oberseite flächenbündig zur Ladefläche ausgerichtet in der Ausnehmung (34) sitzt.

13. Nutzfahrzeug nach Anspruch 11 oder 12, **dadurch**
**gekennzeichnet, dass** mindestens der der Ladefläche zugeordnete Schenkelabschnitt (32) des Anschlussprofils (30) eine Querschnittsform aufweist, die sich ausgehend von dem Basisabschnitt (31) des Anschlussprofils (30) in Richtung der freien Vorderkante des Schenkelabschnitts (32) verjüngt.
